# EUROPEAN PATENT SPECIFICATION

(11) **EP 2 670 990 B1**
(45) Date of publication and mention of the grant of the patent: **04.03.2015**
(21) Application number: 12714052.3
(22) Date of filing: 31.01.2012
(51) Int. Cl.: F16B 13/00, F16B 13/02, F16B 13/06, F16B 13/12

(54) **ELONGATED PLASTIC FIXING PLUG**
LÄNGLICHER DÜBEL AUS KUNSTSTOFF
CHEVILLE DE FIXATION ALLONGEE EN MATIERE PLASTIQUE

(30) Priority: 02.02.2011 IT NA20110007
(43) Date of publication of application: 11.12.2013
(73) Proprietor: Tecfi S.p.A., 80122 Napoli (IT)
(72) Inventor: BERTAMINO, Giovanni, I-80127 Napoli (IT)
(74) Representative: Comparone, Tommaso
(86) International application number: PCT/IT2012/000031
(87) International publication number: WO 2012/104883

(56) References cited:
- EP-A1- 0 234 183
- DE-U1- 8 321 395
- DE-U1-202006 019 559
- GB-A- 2 200 966
- US-A- 4 360 301

## Description

### Technical field

The present invention relates to an elongated plastic expansible fixing plug.

A fixing plug is a connecting element that is inserted into a hole previously made in a material, such as masonry or concrete, and locked therein upon an expansion by means of a connecting member. The connecting member, usually a screw, joins that material, masonry or concrete, with another element, e.g. a plate or a panel made of wood or other material.

### Background art

ALLFIX Italy srl in Ragusa produces various elongated fixing plugs, suitable for fastening on masonry, be it compact or made of hollow clay tiles. Among the ALLFIX products the AUR/P fixing plug has a substantially cylindrical shaped body having externally a smooth part and a saw-toothed part, as seen from its front end to its rear end. The body has four circumferentially equally spaced longitudinal slits that are joined in a centrally perforated end portion. The smooth part is provided with protrusions near the saw-toothed part, protrusions which prevent the fixing plug to rotate in the masonry in turning the screw inside the fixing plug. When the screw is nearly completely driven, that is when the head of the screw abuts the front end of the fixing plug, the tip of the screw is inserted into the hole of the end portion of the fixing plug, turning this end portion and pulling the latter towards the front end of the fixing plug, the longitudinal slits allowing the body of the fixing plug to be expanded with the arching of the strips of the fixing plug material being between a slit and the closer one. Said arching compresses the fixing plug against the walls of the hole, when the material of the masonry is solid. When there are cavities in the masonry, a further turning causes the torsion of the strips of material with a result that the so-called "pine cone" is formed. The strips of material remain separated from each other.

The AUR/P fixing plug has some disadvantages because its protrusions hinder the rotation of the fixing plug only with respect to the masonry, and not with respect to the panel or the plate.

Moreover, since the slits are longitudinal, the fixing plug works well in case of a hole in a solid material, but not when cavities are present. When cavities are present, a twist creates a pine cone rather than a real knotting as said by ALLFIX Italia s.r.l., without achieving an effective fastening of the fixing plug in the cavity.

Furthermore, in the AUR / P fixing plug the ending portion does not undergo any further expansion useful to fasten the fixing plug in the previously made hole.

GB 2 200 966 A discloses a generally cylindrical plastic fixing plug with a smooth part and a saw-toothed part according to the preamble of claim 1.

Other fixing plugs are described in US 4,360,301 A, DE 83 21 395 U1, DE 20 2006 019559 U1, and EP 0 234 183 A1.

### Disclosure of invention

The problem to be solved by the present invention may be regarded as providing an alternative fixing plug configuration suitable for installation in work pieces with cavities.

In particular, one object of the present invention is to allow an effective knotting of the fixing plug when the fixing plug is inserted into a masonry with cavities, but also to cause a simple expansion of the body of the fixing plug when there is no cavity around the hole.

Another object of the invention is, when a masonry is solid, to prevent the rotation of the fixing plug with respect to the masonry as well as to an external element that has to be fixed to the masonry itself.

Yet another object of the present invention is to provide an effective fastening against the possible extraction of the fixing plug even in its rear end opposite to its front end.

In this context, the object is reached with an elongated plastic fixing plug that is expansible by the insertion of a connection screw, comprising a generally cylindrical body having a generatrix parallel to the longitudinal axis of the body, and externally having, from its front end to its rear end, a smooth part and a saw-toothed part ending in a pointed portion, the saw-toothed part comprising two opposite groups of parallel through slots equally inclined with respect to said generatrix so that created between a slot and the adjacent one in each slot group is an easily deformable plastic filiform section, in order to allow the fixing plug to be knotted in a cavity of a hollow tile or similar, into which the expansible fixing plug is inserted, when it is deformed by its connection screw.

### Brief description of drawings

Additional features and advantages of the present invention will appear more clearly from the indicative description, and therefore not limiting, of an embodiment of an expansible fixing plug and an alternative embodiment as illustrated in the attached drawings in which:
- Figure 1 is a partially cut side view of a fixing expansible plug according to the present invention;
- Figure 2 is a plan view of the front end of the fixing plug of Figure 1;
- Figure 3 is a longitudinal section of the fixing plug of Figure 1;
- Figures 4 and 5 are a side view and a plan view respectively of an alternative embodiment of the fixing plug of Figures 1 and 2;
- Figure 6a is a side view of a fixing plug inserted into a wooden panel depicted in a cross-sectioned view, and
- Figures 6b, 6c, 6d, 6e are side views of the fixing plug similar to those of Figure 6a, a connection screw being shown in subsequent turning steps.

### Best mode for carrying out the invention

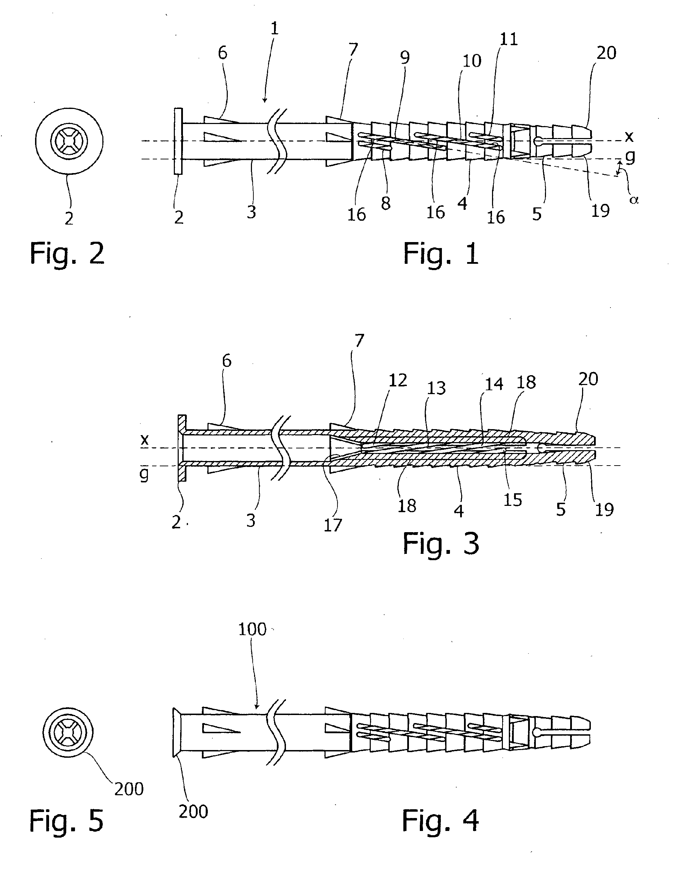

Referring initially to Figures 1 to 3, in which an embodiment of a fixing plug according to the invention is shown in a side view, in a plan view and in a longitudinal section respectively, a body of plastic material, generally nylon, is indicated as 1. The body 1 is substantially cylindrical, so that it can be considered as obtained by the rotation of a generatrix g around a longitudinal axis x of the body 1 (as shown in Figures 1 and 3). The body 1 has a front end and a rear end. From one end to the other, the body 1 comprises a head 2, a smooth part 3 and a saw-toothed part 4 ending with a pointed portion 5.

According this embodiment the head 2 is cylindrical. The smooth part 3 is peripherally provided with a front set 6 and a rear set 7 of anti-rotation ridges, the front set 6 and the rear set 7 being longitudinally spaced with respect to the head 2. The ridges are arranged in two areas of the smooth part 3, and every ridge is angularly equidistantly spaced from the adjacent ones in each set. For example, four ridges in each set are spaced at 90 degrees from each other.

Conveniently, every anti-rotation ridge has only one ramp surface that is tapered toward the rear end of the fixing plug, in the direction of turning of a screw into the fixing plug. The ramp surface is delimited by faces that are orthogonal to the smooth part of the body, so that the ridges counteract the clockwise rotation of the fixing plug by a step upon turning a connection screw, as shown hereafter. In particular, the front set 6 of anti-rotation ridges is usually engaged with an item, such as a plate or panel, which has to be fixed to a wall, and the rear set 7 of anti-rotation ridges is engaged with the wall masonry. This arrangement is well known and therefore is not shown in detail.

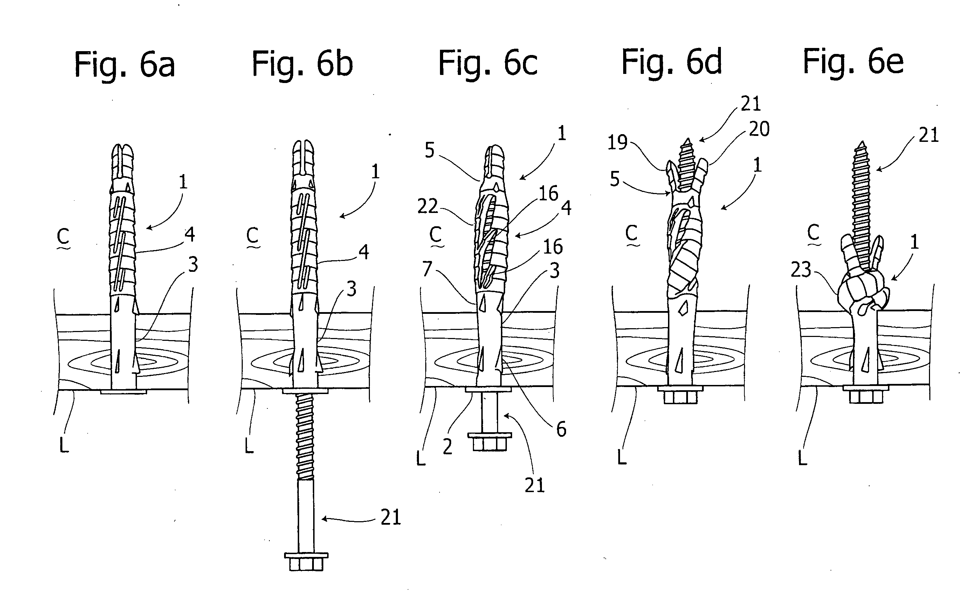

The saw-toothed part 4 of the fixing plug comprises two groups of parallel through slots 8, 9, 10, 11, and 12, 13, 14, 15. Said groups of through slots are arranged on two opposite faces of the saw-toothed part 4 and are equally inclined with respect to generatrix g of the body 1, so that a filiform section of plastic material, generally indicated with 16, is created between a slot and the adjacent one, as shown in Figure 1. This filiform section 16 is easily deformable so that, when the connection screw is driven in the fixing plug that is inserted into a hole of a solid wall, the expansion of two halves of the saw-toothed part 4 is permitted, and upon continuing to turn the connection screw in a wall having a cavity, the formation of a knot of the fixing plug occurs in the cavity. This is shown more in detail below, with reference to Figures 6a, 6b, 6c, 6d, 6e, which are side views of the fixing plug with its connection screw being shown in subsequent turning steps.

Referring now to the cross-section view in Figure 3, the saw-toothed part 4 is shown as having internally a funnel-shaped portion 17, in order to direct the tip of the connection screw, and longitudinal ribs 18 in which the screw connection is turned.

Moreover, in the embodiment of the present invention the pointed portion 5, in which the saw-toothed part 4 ends, is longitudinally and centrally cut so that it is fork-shaped with opposed solid arms 19, 20 being designed to be opened and expanded when the connection screw is turned. The connection screw creates a pressure into the hole into which the expansible fixing plug is inserted, causing an additional effect of fastening.

Another embodiment of the fixing plug according to the invention is shown in a plan view and in a side view in Figures 4 and 5 respectively. It is clear that the body of this fixing plug, indicated as 100, is substantially the same to that in Figures 1 to 3, so that same reference numerals are omitted for indicating and denoting identical parts. The only difference consists of the countersunk flat head 200 instead of the cylindrical head 2 of the first embodiment of the fixing plug according to the invention.

With reference to Figures 6a, 6b, 6c, 6d, 6e the operation of the fixing plug in co-operation with a cavity C behind a wooden panel L is shown.

Figure 6a shows that the body 1 of the fixing plug is inserted into a hole previously made in the panel L. A connection screw 21 is then inserted into the fixing plug (Figure 6b). The connection screw 21 is turned into the pointed portion 5 (Figure 6c), which is pulled by screwing down towards the end of head 2 of the body 1 of the fixing plug. The smooth body part 3, which is provided with the front and the rear sets 6 and 7 of ridges, tends to remain fixed, while the saw-toothed part 4 starts to expand centrally in a bulge 22. The bulge 22 is facilitated by the presence of two groups of parallel through slots 8, 9, 10, 11, and 12, 13, 14, 15, which allows the deformation of filiform sections 16 that are between a slot and another one.

As shown in Figure 6d, the further turning with a result that the tip of the connection screw 21 exits the pointed portion 5, causes the body 1 to be twisted and, more precisely, opposite parts of the body 1 separated by the group of through slots to be twisted. At the same time, as the connection screw 21 forwards, it causes to spread apart the opposed solid arms 19, 20 of the pointed portion 5. The further screwing down of the connection screw 21 in the fixing plug as shown in the figure 6e achieves the so-called knotting of the fixing plug with a consequence that a knot 23 is created that, when abutting the panel L, greatly increases the tensile force required for the removal of the fixing plug from the panel L.

Laboratory tests have demonstrated a high removal load also in the case of fixing plugs inserted into solid material. In this case, the formation of the node does not occur, but only the body of the fixing plug expands against the walls of the hole into which the fixing plug is inserted.

For example, a typical load to the fixing plug removal was measured 523 N in non-cracked C20/25 concrete. The typical load was measured 69 N in a brick of tufa having a compressive strength of 7.6 N/mm².

The through slots 8, 9, 10, 11, and 12, 13, 14, 15, are inclined in the same direction in which the connection screw is screwed in the fixing plug with an angle α to the generatrix g of the solid of revolution forming the body 1 or 100 of the fixing plug. The value of the angle α can be varied depending on the knotting effect requested. It must be understood however that the overlapping of the through slots is critical to achieve the filiform sections 16 which allow the deformation of the body of the fixing plug in turning the connection screw.

## Claims

1. An elongated plastic fixing plug that is expansible upon insertion of a connection screw (21), comprising a generally cylindrical body (1) having a generatrix (g) parallel to the longitudinal axis (x) of the body (1), and externally having, from a front end to a rear end thereof, a smooth part (3) and a saw-toothed part (4) ending with a pointed portion (5), **characterised in that** said saw-toothed part (4) comprises two opposite groups of parallel through slots (8, 9, 10, 11; 12, 13, 14, 15) being equally inclined with respect to said generatrix (g) so that created between a slot and the adjacent one in each slot group is an easily deformable plastic filiform section (16), in order to allow the fixing plug to be knotted in a cavity of a hollow tile or similar, into which the expansible fixing plug is inserted, when it is deformed by its connection screw (21).

2. The fixing plug according to claim 1 wherein the through slots (8, 9, 10, 11; 12, 13, 14, 15) are inclined in the same direction in which the connection screw is turned in the fixing plug.

3. The fixing plug according to claim 1 wherein said smooth part (3) has peripherally, longitudinally spaced front and rear series (6; 7) of anti-rotation ridges, the ridges of each series being angularly equidistantly spaced from each other.

4. The fixing plug according to claim 3 wherein each anti-rotation ridge has one ramp surface being tapered toward the rear end with respect to the turning direction of the connection screw, the ramp surface being delimited by faces at right angle with the smoothed part of the body (1).

5. The fixing plug according to claim 1 wherein the pointed portion (5) is longitudinally and centrally cut so that it is fork-shaped with opposed solid arms (19, 20) being designed to be opened and expanded, creating a pressure in a hole into which the expansible fixing plug is inserted, when the connection screw (21) is driven in it.

## Patentansprüche

1. Verlängerter Kunststoffbefestigungsdubel, der beim Einsetzen einer Verbindungsschraube (21) spreizbar ist, umfassend einen allgemein zylindrischen Körper (1), aufweisend eine Generatrix (g), die parallel zur Längsachse (x) des Körpers (1) verläuft, und außenseitig aufweisend von einem frontseitigen zu einem rückseitigen Ende davon einen glatten Teil (3) und einen Sägezahnteil (4), endend mit einem spitz zulaufenden Abschnitt (5), **dadurch gekennzeichnet, dass** der Sägezahnteil (4) zwei entgegengesetzte Gruppen paralleler Durchgangsschlitze (8, 9, 10, 11; 12, 13, 14, 15) umfasst, die gleichmäßig zur Generatrix (g) geneigt sind, sodass zwischen einem Schlitz und dem angrenzenden in jeder Schlitzgruppe ein filiformer, leicht verformbarer Kunststoffabschnitt (16) geschaffen wird, um zu erlauben, dass der Befestigungsdübel in einen Hohlraum einer hohlen Fliese oder Ähnliches eingebunden werden kann, in den der spreizbare Befestigungsdübel eingesetzt wird, wenn er durch seine Verbindungsschraube (21) verformt wird.

2. Befestigungsdübel nach Anspruch 1, wobei die Durchgangsschlitze (8, 9, 10, 11; 12, 13, 14, 15) in dieselbe Richtung geneigt sind, in die die Verbindungsschraube im Befestigungsdübel gedreht wird.

3. Befestigungsdübel nach Anspruch 1, wobei der glatte Teil (3) umfangs- und längsseitig beabstandete front- und rückseitige Reihen (6, 7) von Drehsicherungsrippen aufweist und die Rippen jeder Reihe winkelig gleichabständig voneinander beabstandet sind.

4. Befestigungsdübel nach Anspruch 3, wobei jede Drehsicherungsrippe eine Rampenoberfläche aufweist, die sich zum rückseitigen Ende zur Drehrichtung der Verbindungsschraube verjüngt, wobei die Rampenoberfläche durch rechtwinklige Seiten mit dem glatten Teil des Körpers (1) begrenzt ist.

5. Befestigungsdübel nach Anspruch 1, wobei der spitz zulaufende Abschnitt (5) längs und mittig geschnitten ist, sodass er gabelförmig ist, mit entgegengesetzten festen Armen (19, 20), die ausgestaltet sind, um geöffnet und verbreitert zu werden und einen Druck in einem Loch zu erzeugen, in das der spreizbare Befestigungsdübel eingefügt wird, wenn die Verbindungsschraube (21) eingeführt wird.

## Revendications

1. Cheville de fixation allongée en plastique étant expansible lors de l'insertion d'une vis d'assemblage (21), comprenant un corps (1) généralement cylindrique ayant une génératrice (g) parallèle à l'axe longitudinal (x) du corps (1) et comportant à l'extérieur, d'une extrémité antérieure à une extrémité postérieure, une partie lisse (3) et une partie en dents de scie (4) se terminant par une section pointue (5), **caractérisée en ce que** la partie en dents de scie (4) comprend deux groupes opposés de fentes débouchantes parallèles (8, 9, 10, 11 ; 12, 13, 14, 15) étant inclinées de façon identique par rapport à ladite génératrice (g) de manière à créer, entre une fente et la fente adjacente de chaque groupe de fentes, une section filiforme en plastique (16) facilement déformable, de façon à pouvoir attacher la cheville de fixation dans une cavité d'un bloc creux ou similaire dans lequel la cheville de fixation expansible est insérée, lorsqu'elle est déformée par sa vis d'assemblage (21).

2. Cheville de fixation selon la revendication 1, dans laquelle les fentes débouchantes (8, 9, 10, 11; 12, 13, 14, 15) sont inclinées dans le même sens dans lequel la vis d'assemblage tourne dans la cheville de fixation.

3. Cheville de fixation selon la revendication 1, dans laquelle ladite partie lisse (3) possède des séries antérieures et postérieures (6 ; 7) de stries antirotation espacées périphériquement et longitudinalement, les stries de chaque série étant angulairement équidistantes les unes des autres.

4. Cheville de fixation selon la revendication 3, dans laquelle chaque strie antirotation possède une surface inclinée étant conique vers l'extrémité postérieure par rapport au sens de rotation de la vis d'assemblage, la surface inclinée étant délimitée par des côtés orthogonaux à la partie lisse du corps (1).

5. Cheville de fixation selon la revendication 1, dans laquelle la partie pointue (5) est coupée longitudinalement et centralement de manière à être en forme de fourchette avec des bras rigides opposés (19, 20) étant conçus pour s'ouvrir et s'élargir pour créer une pression dans un trou dans lequel la cheville de fixation expansible est insérée lorsque la vis d'assemblage (21) est introduite en son sein.
